# FASCICULE DE BREVET EUROPEEN

(11) **EP 1 427 934 B1**
(45) Date de publication et mention de la délivrance du brevet: **09.02.2005**
(21) Numéro de dépôt: 02783175.9
(22) Date de dépôt: 18.09.2002
(51) Int. Cl.: F02M 31/125, F02M 37/22

(54) **DISPOSITIF DE FILTRATION DE GAZOLE DESTINE A ALIMENTER UN MOTEUR DIESEL ET LIGNE D'ALIMENTATION EN GAZOLE COMPORTANT UN TEL DISPOSITIF**
VORRICHTUNG ZUM FILTERN VON DIESELKRAFTSTOFF, DER EINEM DIESELMOTOR ZUGEFÜHRT WERDEN SOLL, UND EINE SOLCHE VORRICHTUNG ENTHALTENDE DIESELKRAFTSTOFFZUFÜHRUNGSLEITUNG
DEVICE FOR FILTERING DIESEL FUEL THAT IS INTENDED TO SUPPLY A DIESEL ENGINE AND A DIESEL FUEL SUPPLY LINE COMPRISING ONE SUCH DEVICE

(30) Priorité: 19.09.2001 FR 0112108
(43) Date de publication de la demande: 16.06.2004
(73) Titulaire: Delphi Technologies, Inc., Troy, MI 48098 (US)
(72) Inventeur: DECAUX, Daniel, Henri, F-41000 Blois (FR)
(74) Mandataire: Colombet, Alain André
(86) Numéro de dépôt international: PCT/FR2002/003191
(87) Numéro de publication internationale: WO 2003/025381

(56) Documents cités:
- US-A- 4 372 260
- US-A- 4 491 120
- US-A- 4 596 224
- US-A- 4 650 576

## Description

La présente invention concerne un dispositif de filtration du gazole destiné à alimenter un moteur diesel, du type défini dans le préambule de la revendication 1.

Elle s'applique préférentiellement au domaine des lignes basse pression d'alimentation en gazole de moteurs diesel, par exemple ceux de véhicules ou de machines.

Ce type de dispositif de filtration est destiné à éliminer du gazole des impuretés solides telles que de la silice ou des agglomérats organiques, et/ou de l'eau en émulsion contenue dans le gazole. Le comportement et la longévité du moteur diesel alimenté par le gazole ainsi filtré s'en trouvent améliorés.

Par ailleurs, le gazole est sensible au froid dans le sens où lorsqu'il est stocké à des températures inférieures à 0°C, sa viscosité augmente fortement, rendant son filtrage délicat. En effet, un gazole trop froid appliqué à un ensemble de filtrage risque d'encrasser celui-ci, par exemple en le paraffinant, l'endommageant souvent de façon irréversible. C'est pourquoi il est connu d'associer à l'ensemble de filtrage un ensemble de chauffage électrique du gazole à filtrer, destiné à fluidifier le gazole lors de son utilisation à froid.

Plus précisément, sur une ligne d'alimentation en gazole, il est connu d'agencer un ensemble de chauffage électrique auquel est relié en aval l'ensemble de filtrage. Un tel agencement se révèle cependant complexe à installer au sein d'une architecture moteur, les ensembles de chauffage et de filtrage d'un tel dispositif de filtration devant être positionnés et fixés en des emplacements limités en raison des contraintes d'encombrement moteur. De plus, cet agencement nécessite un tuyau de liaison entre l'organe de chauffage et l'ensemble de filtrage, lequel tuyau induit nécessairement un risque de fuite, ainsi qu'une perte calorifique pour le gazole qu'il achemine.

US 4 491 120 décrit un dispositif du type défini plus haut, dans lequel les carters des ensembles de chauffage et de filtrage sont retenus l'un sur l'autre par des clips à ressort. De tels clips présentent les inconvénients d'être difficilement manoeuvrables, de faire courir des risques de coincement et de limiter la précision, l'étanchéité et l'isolation thermique des moyens de liaison raccordant les chambres de chauffage et de filtrage.

Le but de l'invention est de proposer un dispositif du type précité qui offre une grande simplicité d'installation, tout en optimisant le chauffage du gazole à filtrer.

A cet effet, l'invention a pour objet un dispositif du type précité, qui présente les caractéristiques de la partie caractérisante de la revendication 1.

D'autres caractéristiques de ce dispositif, prises ensemble ou selon toutes les combinaisons techniquement possibles, sont énoncées dans les revendications dépendantes 2 à 13.

L'invention a également pour objet une ligne d'alimentation en gazole, notamment d'un moteur diesel, présentant les caractéristiques de la revendication 14.

L'invention sera mieux comprise à la lecture de la description qui va suivre, donnée uniquement à titre d'exemple, et faite en se référant aux dessins sur lesquels :
- la figure 1 est une vue schématique d'une ligne d'alimentation en gazole selon l'invention ;
- la figure 2 est une vue en perspective du dispositif de filtration selon l'invention ;
- la figure 3 est une vue de face de l'ensemble de chauffage du dispositif de la figure 2 ;
- la figure 4 est une vue en perspective de l'ensemble de filtrage du dispositif de la figure 2 ;
- la figure 5 est une vue analogue à celle de la figure 3, d'une variante de l'ensemble de chauffage selon l'invention ;
- la figure 6 est une vue en coupe selon le plan VI-VI indiqué sur la figure 5 ; et
- la figure 7 est une vue selon la flèche VII indiquée sur la figure 5.

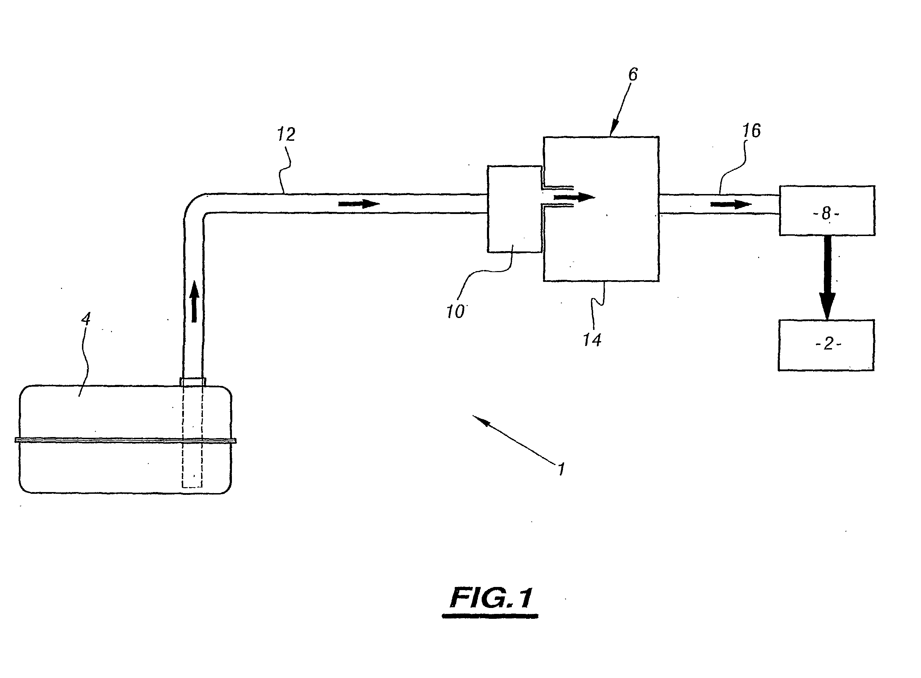

Sur la figure 1 est représentée une ligne 1 d'alimentation en gazole d'un moteur diesel 2. La ligne 1 est une ligne basse pression, c'est-à-dire que le gazole se déplace dans cette ligne, comme indiqué par les flèches, en raison d'une dépression à son extrémité aval par rapport à son extrémité amont. La ligne 1 comporte, d'amont en aval, un réservoir à gazole 4, un dispositif 6 de filtration du gazole et une pompe 8.

A l'exception du dispositif 6 qui sera détaillé ci-après, le réservoir 4 et la pompe 8 sont des éléments connus en eux-mêmes qui ne seront pas détaillés plus avant.

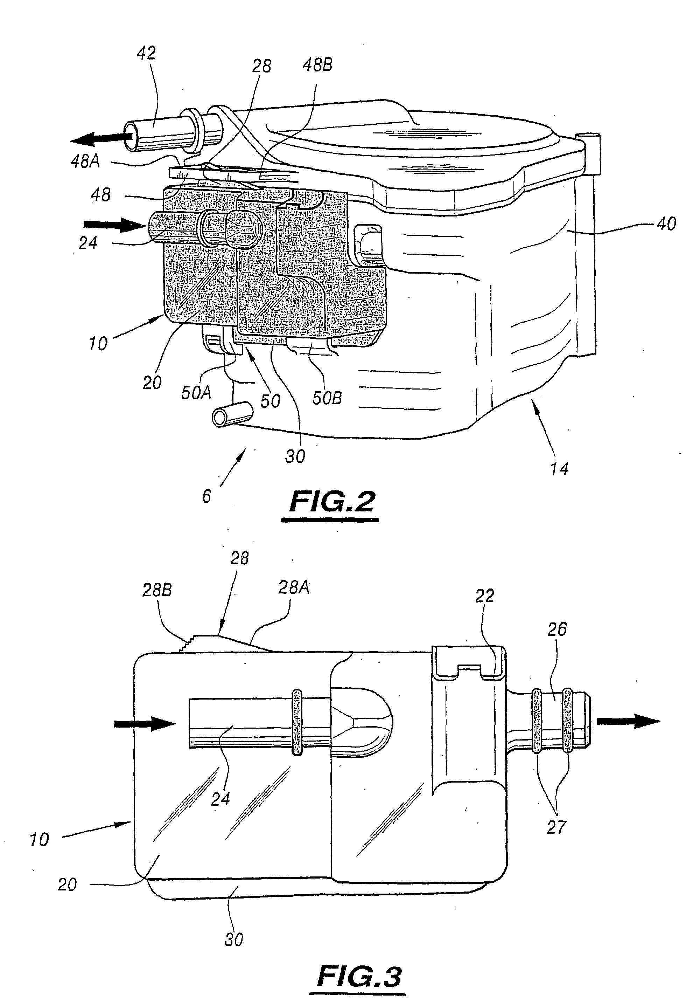

Comme représenté sur les figures 1 et 2, le dispositif 6 comporte, d'une part, un ensemble 10 de chauffage du gazole, raccordé au réservoir 4, via un conduit d'approvisionnement 12, et, d'autre part, un ensemble 14 de filtrage du gazole issu de l'ensemble de chauffage et raccordé à la pompe 8, via un conduit d'évacuation 16. Sur la figure 2, l'ensemble de chauffage 10 est grisé par rapport à l'ensemble de filtrage 14.

L'ensemble de chauffage 10 comporte, comme représenté plus en détail sur la figure 3, un carter 20 de forme générale sensiblement parallélépipédique et délimitant intérieurement une chambre, non visible sur les figures, de chauffage du gazole. A cet effet, l'ensemble 10 comporte intérieurement un ou plusieurs éléments chauffant électriques. Ces éléments, connus en eux-mêmes, sont agencés dans la chambre de chauffage et reliés électriquement à un connecteur électrique 22. Ce connecteur est agencé sur le carter 20 et destiné à recevoir un câble d'alimentation électrique, par exemple connecté à une batterie d'accumulateurs.

L'ensemble 10 comporte extérieurement un manchon 24 d'entrée du gazole à chauffer à l'intérieur de la chambre de chauffage et un manchon 26 de sortie de gazole chauffé, sur lequel sont agencés deux joints toriques d'étanchéité 27. Ces manchons s'étendent suivant la direction longitudinale du carter 20, ce dernier étant par exemple constitué de matière plastique rigide et les manchons d'entrée 24 et de sortie 26 étant moulés d'un seul tenant avec le carter 20.

De plus, le carter 20 possède des caractéristiques extérieures remarquables, qui seront justifiées ci-après. D'abord, il comporte une face longitudinale sensiblement plane ; dans l'exemple représenté, il s'agit de la face non visible sur la figure 3, opposée à la face longitudinale sur laquelle est agencé le manchon d'entrée 24. De plus, sa face supérieure comporte, dans sa partie la plus éloignée du manchon de sortie 26, une excroissance 28. Cette excroissance comporte, du côté manchon de sortie 26, une pente douce 28A et, du côté opposé, une pente à crans 28B. En outre, la face inférieure du carter 20 comporte un rail longitudinal 30 d'épaisseur continûment décroissante en se rapprochant du côté du manchon de sortie 26.

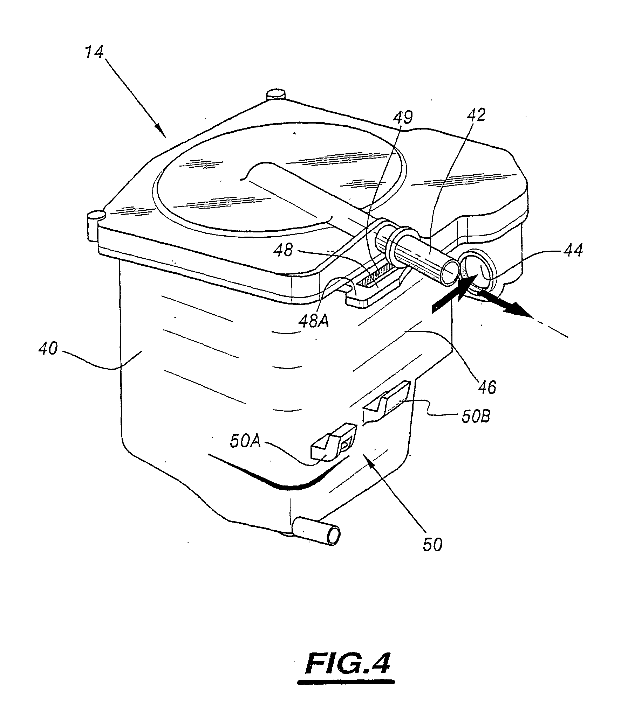

Sur la figure 4 est détaillé l'ensemble de filtrage 14. Ce dernier comporte un carter 40 de forme générale sensiblement parallélépipédique délimitant intérieurement une chambre, non visible sur les figures, de filtrage du gazole. A cet effet, l'ensemble 14 comporte intérieurement un ou plusieurs éléments filtrant tels que du papier, une maille de Nylon, etc....Ces éléments sont connus en eux-mêmes et permettent de retenir les impuretés solides et/ou l'eau en émulsion que contient le gazole. Une fois ces éléments filtrant saturés, il convient de changer l'intégralité de l'ensemble de filtrage 14 par un ensemble neuf.

L'ensemble 14 comporte extérieurement un manchon 42 de sortie du gazole épuré, adapté pour être relié au conduit d'évacuation 16. De plus, un orifice tubulaire 44 est ménagé au travers du carter 40 de façon à recevoir le manchon de sortie 26 de l'ensemble de chauffage 6.

Le carter 40 de l'ensemble de filtrage 14 est constitué d'une matière plastique sensiblement analogue à celle du carter 20 de l'ensemble de chauffage 10. Par complémentarité de forme, le carter 40 est adapté pour supporter et maintenir en place, de façon amovible, le carter 20. A cet effet, le carter 40 présente extérieurement une surface 46 sensiblement plane et de dimensions sensiblement complémentaires à celles de la face longitudinale plane précitée du carter 20. De plus, le carter 40 comporte une patte 48, ménageant une fente 49 de réception de l'excroissance 28 du carter 20. La patte 48 est reliée au carter par deux branches 48A, 48B dont au moins la branche 48A, agencée sensiblement perpendiculairement à la surface plane 46, est sécable, par exemple au moyen d'un dimensionnement adéquat. Par ailleurs, le carter 40 comporte une glissière 50 de coulissement du rail longitudinal 30 du carter 20. Sur l'exemple représenté, la glissière comporte deux parties 50A et 50B, la partie 50A sensiblement en regard de la branche 48A étant de structure plus renforcée que la seconde partie 50B.

L'assemblage du carter 20 de l'ensemble de chauffage 10 sur le carter 40 de l'ensemble de filtrage 14 s'effectue de la façon suivante :

L'ensemble de chauffage 10 est d'abord positionné par rapport à l'ensemble de filtrage 14 de sorte que la surface 46 du carter 40 affleure sensiblement la face longitudinale plane précitée du carter 20. Puis, par un mouvement de translation de l'ensemble de chauffage 10 par rapport à l'ensemble de filtrage 14, le rail longitudinal 30 du carter 20, guidé par la glissière 50 du carter 40, amène le manchon de sortie 26 du carter 20 à pénétrer l'orifice tubulaire 44 du carter 40. Ce mouvement de translation se poursuit jusqu'à ce que l'excroissance 28, qui a préalablement soulevé de la patte 48 à la fois au moyen de sa pente douce 28A et sous l'effet de soulèvement du carter 20 par rapport au carter 40 généré par l'épaisseur croissante du rail 30, se loge à l'intérieur de la fente 49.

La branche arrière 48A, par rapport au sens du mouvement de translation précédent, de la patte 48 se trouve ainsi en prise avec un cran de la pente à crans 28B de l'excroissance 28, empêchant alors l'ensemble 10 de se dégager de l'ensemble 14. L'excroissance 28 forme ainsi une cale de retenue en translation de l'ensemble de chauffage 10.

Les ensembles de chauffage 10 et de filtrage 14 coopèrent ainsi par complémentarité de forme de leurs carters respectifs 20 et 40, de sorte que le manchon 26 et l'orifice 44 forment des moyens de raccordement direct et étanche des chambres de chauffage et de filtrage.

Une fois le dispositif de filtration 6 assemblé comme décrit ci-dessus, son fonctionnement, et celui de la ligne d'alimentation 1 de la figure 1, sont les suivants.

Lors de l'entraînement du gazole dans la ligne basse pression 1 par la pompe aval 8, le gazole pénètre dans l'ensemble de chauffage 10 où il est, si nécessaire, chauffé par le ou les éléments électriques chauffant précités. Le gazole quitte la chambre de chauffage de l'ensemble 10 en empruntant le manchon 26 de raccord entre les ensembles 10 et 14, et parvient ainsi directement dans la chambre de filtrage de l'ensemble 14. Il en ressort par le manchon de sortie 42 et emprunte le conduit d'évacuation 16 jusqu'à la pompe 8 et au moteur diesel 2.

Le dispositif de filtration selon l'invention est ainsi facile d'installation puisque, une fois les ensembles 10 et 14 fixés l'un à l'autre, il se raccorde à la ligne 1 à la manière d'un unique élément de filtrage courant. La fixation de l'ensemble de chauffage sur l'ensemble de filtrage s'effectue quant à elle par un unique mouvement de translation de l'un par rapport à l'autre. Les joints toriques 27 assurent une bonne étanchéité du raccordement entre les deux ensembles, même en présence de vibrations et/ou d'un léger désaxage entre le manchon 26 et l'orifice de réception 44.

Dans la mesure où le manchon 26 et l'orifice 44 raccordent les chambres de chauffage et de filtrage de façon directe, le gazole chauffé ne subit sensiblement aucune perte calorifique durant son transfert de la chambre de chauffage à la chambre de filtrage, augmentant par ailleurs les performances de filtration de l'ensemble 14.

De plus, lorsque l'ensemble de filtrage est saturé et prêt à être jeté pour être remplacé par un ensemble de filtrage neuf, il suffit de couper la branche 48A de la patte 48. La rupture de la patte au niveau de sa partie sécable 48A libère la cale 28 et permet de dégager l'ensemble de chauffage 10 par un mouvement de translation de sens opposé à celui nécessaire pour fixer l'ensemble de chauffage sur celui de filtrage. L'ensemble de chauffage 10 est prévu pour avoir une durée de vie plus longue que celle de l'ensemble de filtrage 14, de sorte qu'il est réutilisable avec plusieurs ensembles de filtrage successifs. Ces opérations de maintenance présentent en outre l'avantage d'être propres, puisque aucun des carters des ensembles n'est à ouvrir. De plus, un ensemble de filtrage à patte brisée porte une marque visuelle manifeste qu'il a déjà été utilisé et ne peut plus maintenir en place d'ensemble de chauffage.

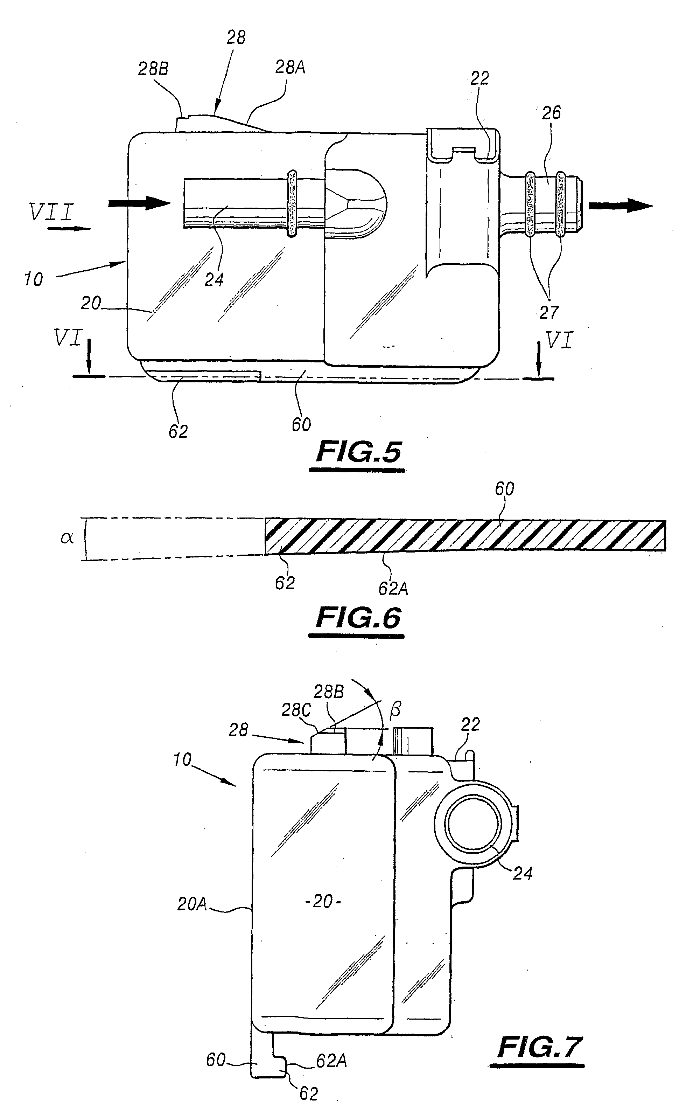

Sur les figures 5 à 7 est représentée une variante de l'ensemble 10 de chauffage de gazole du dispositif de filtration 6 selon l'invention. L'ensemble 10 des figures 5 à 7 ne se distingue de celui des figures 2 et 3 que par ce qui suit.

En plus de la face longitudinale plane précitée, visible sur la figure 7 et référencée 20A, le carter 20 de cet ensemble de chauffage 10 comporte un rail longitudinal inférieur 60 adapté pour coulisser, de la même façon que le rail 30 des figures 2 et 3, dans la glissière 50 du carter 40 de l'ensemble de filtrage 14. A la différence du rail 30 précité, le rail 60 est d'épaisseur sensiblement constante et comporte une excroissance 62 ménagée sur la partie du rail la plus éloignée du manchon 26. Cette excroissance est avantageusement réalisée d'un seul tenant avec le reste du rail 60. La face 62A, dirigée à l'opposé de la face 20A, de l'excroissance 62 forme un angle, noté α, par rapport à la direction longitudinal du rail 60, comme représenté sur la figure 6. Cet angle α est par exemple de l'ordre de quelques degrés.

De plus, l'excroissance 28 de cette variante de l'ensemble de chauffage comporte un seul cran 28B. La face 28C de l'excroissance, destinée à être tournée vers l'ensemble de filtrage 14 forme un angle inférieur à 90° avec la face supérieure sensiblement plane de l'excroissance 28. Cet angle est noté β sur la figure 7 et vaut avantageusement 30°.

L'assemblage du carter 20 de l'ensemble de chauffage 10, qui vient d'être décrit, sur le carter 40 de l'ensemble de filtrage 14 s'effectue sensiblement comme décrit à propos des figures 2 à 4.

Lors du mouvement de translation de l'ensemble de chauffage 10 par rapport à l'ensemble de filtrage 14, le rail inférieur 60 du carter 20 est guidé par la glissière 50 du carter 40. Au fur et à mesure que l'excroissance 62, formant ainsi rampe, est introduite dans la partie renforcée 50A de la glissière 50, cette excroissance 62 amène le carter 20 à se décaler transversalement vers le carter 40.

De façon sensiblement concomitante, la pente douce 28A de l'excroissance 28 soulève la patte 48 jusqu'à ce que l'excroissance 28 se loge à l'intérieur de la fente 48 délimitant le bord de la fente 49 vient en appui sur la face inclinée 28C de l'excroissance 28, formant alors une rampe à même de décaler transversalement le carter 20 en l'éloignant du carter 40.

La position transversale du carter 20 est fixée par combinaison des mouvements précités de décalage transversal à la fois de la partie inférieure du carter 20 vers le carter 40 et de la partie supérieure du carter 20 dans le sens opposé.

Une fois les ensembles de chauffage 10 et de filtrage 14 assemblés, le carter 20 est d'une part retenu en translation par rapport au carter 40, comme pour le mode de réalisation des figures 2 à 4, et d'autre part retenu transversalement à la direction de translation par rapport au carter 40.

Le dispositif de filtration décrit en regard des figures 5 à 7 présente l'avantage d'être plus robuste, ses moyens de fixation possédant une meilleure tenue mécanique en vibration.

Diverses variantes de réalisation du dispositif de filtration selon l'invention sont envisageables dans la mesure où, bien que disposant de carters totalement distincts, c'est-à-dire ne possédant pas de paroi commune, mais de formes sensiblement complémentaires, l'ensemble de chauffage et l'ensemble de filtrage sont raccordés directement et de façon étanche l'un à l'autre, par exemple par un manchon court solidaire de l'un des deux ensembles et essentiellement logé dans la chambre intérieure de l'autre de ces ensembles.

Aussi, des formes diverses de carters sont possibles, afin d'obtenir fonctionnellement un dispositif de filtration intégré dont les carters respectifs des ensembles de chauffage et de filtrage coopèrent par complémentarité de forme, tel que décrit en regard des figures précédentes.

De même, les moyens de fixation de l'ensemble de chauffage sur l'ensemble de filtrage sont transposables, sans sortir du cadre de l'invention, en des moyens de fixation de l'ensemble de filtrage sur l'ensemble de chauffage. Par exemple, le rail de coulissement peut être agencé sur le carter de l'ensemble de filtrage et la glissière associée est alors agencée sur le carter de l'ensemble de chauffage.

A titre de variante, le carter 40 de l'ensemble de filtrage 14 comporte des moyens de retenue élastiques de la cale 28 du carter 20 de l'ensemble de chauffage 10, par exemple une patte à ressort.

## Revendications

1. Dispositif de filtration du gazole destiné à alimenter un moteur diesel, du type comprenant un ensemble (10) de chauffage électrique qui comporte un carter (20) délimitant intérieurement une chambre de chauffage du gazole à filtrer, un ensemble (14) de filtrage qui comporte un carter (40) délimitant intérieurement une chambre de filtrage du gazole chauffé, des moyens de liaison des chambres de chauffage et de filtrage, et des moyens d'assemblage des carters (20, 40) des ensembles de chauffage (10) et de filtrage (14), **caractérisé en ce que** les moyens de liaison comportent des moyens (26, 44) de raccordement direct et étanche des chambres desdits ensembles, et **en ce que** les moyens d'assemblage comportent des moyens de fixation amovible du carter (20) de l'un (10) des ensembles de chauffage et de filtrage sur le carter (40) de l'autre (14) desdits ensembles, les carters desdits ensembles coopérant par complémentarité de forme, lesquels moyens de fixation comprennent une liaison coulissante à glissière (30, 50) entre l'ensemble de chauffage (10) et l'ensemble de filtrage (14), et des moyens (28, 48) de retenue en translation d'un desdits ensembles par rapport à l'autre.

2. Dispositif selon la revendication 1, **caractérisée en ce que** les moyens de raccordement comportent un manchon (26) solidaire du carter (20) de l'un (10) des ensembles de chauffage et de filtrage, et un orifice (44) de réception dudit manchon (26) ménagé dans la paroi du carter (40) de l'autre (14) desdits ensembles.

3. Dispositif selon la revendication 2, **caractérisé en ce que** le manchon (26) et le carter (20) duquel il est solidaire forment une pièce d'un seul tenant.

4. Dispositif selon l'une des revendications 2 ou 3, **caractérisé en ce que** les moyens de raccordement (26, 44) sont munis de moyens d'étanchéité (27).

5. Dispositif selon l'une quelconque des revendications 2 à 4, **caractérisé en ce que** le mouvement de raccordement du manchon (26) et de l'orifice (44) de réception dudit manchon est guidé par la liaison coulissante à glissière (30, 50).

6. Dispositif selon l'une quelconque des revendications précédentes, **caractérisé en ce que** la liaison à glissière (30, 50) ménage une rampe (30) inclinée de coulissement de l'un desdits ensembles (10, 14) sur l'autre.

7. Dispositif selon l'une quelconque des revendications précédentes, **caractérisé en ce que** les moyens de retenue en translation comportent une cale (28) solidaire du carter (20) de l'un desdits ensembles, et une patte (48) solidaire du carter (40) de l'autre desdits ensembles, disposée transversalement à la direction de translation et adaptée pour retenir en translation la cale (28) lorsque les carters (20, 40) desdits ensembles (10, 14) sont fixés l'un à l'autre.

8. Dispositif selon la revendication 7, **caractérisé en ce que** sur la face (28B) de la cale (28) en appui sur la patte (48) lorsque les carters (20, 40) desdits ensembles sont fixés l'un à l'autre, est ménagé au moins un cran de retenue.

9. Dispositif selon la revendications 7 ou 8, **caractérisé en ce que** la cale (28) comporte une face inclinée (28A) de dégagement de la patte (48) lors du mouvement de fixation de l'ensemble de chauffage (10) sur l'ensemble de filtrage (14).

10. Dispositif selon l'une quelconque des revendications 7 à 9, **caractérisé en ce que** la patte (48) comporte une partie sécable (48A).

11. Dispositif selon la revendication 10, **caractérisé en ce que** l'ensemble de chauffage (10) est à durée de vie plus longue que celle de l'ensemble de filtrage (14), un même ensemble de chauffage étant adapté pour être raccordé successivement dans le temps à plusieurs ensembles de filtrage.

12. Dispositif selon l'une quelconque des revendications précédentes, **caractérisé en ce que** les moyens de fixation comportent des moyens (28C, 62) de retenue suivant une direction transversale à la direction de translation d'un desdits ensembles (10, 14) par rapport à l'autre.

13. Dispositif selon la revendication 12, **caractérisé en ce que** les moyens de retenue transversale comportent deux rampes (28C, 62) de décalage transversal de l'un desdits ensembles (10, 14) par rapport à l'autre, les sens respectifs de décalage transversal desdites deux rampes étant opposés.

14. Ligne d'alimentation en gazole, notamment d'un moteur diesel, du type basse pression et comportant un réservoir (4), un ensemble de chauffage (10), un ensemble de filtrage (14) et une pompe à gazole (8), **caractérisée en ce qu**e les ensembles de chauffage (10) et de filtrage (14) constituent un dispositif de filtration (6) selon l'une quelconque des revendications précédentes.

## Patentansprüche

1. Vorrichtung zum Filtern von Dieselöl, das einen Dieselmotor versorgen soll, der Art mit einer elektrischen Heizbaugruppe (10), die ein Gehäuse (20) umfasst, das innen eine Heizkammer für das zu filternde Dieselöl begrenzt, einer Filterbaugruppe (14), die ein Gehäuse (40) umfasst, das innen eine Kammer zum Filtern des erhitzen Dieselöls begrenzt, Mitteln zur Verbindung der Heiz- und der Filterkammer und Mitteln zum Zusammenfügen der Gehäuse (20, 40) der Heiz- (10) und der Filterbaugruppe (14), **dadurch gekennzeichnet, dass** die Verbindungsmittel Mittel (26, 44) zur direkten und dichten Verbindung der Kammern der Baugruppen umfassen und dass die Mittel zum Zusammenfügen entfernbare Mittel zur Befestigung des Gehäuses (20) von einer (10) der Heizund der Filterbaugruppe am Gehäuse (40) der anderen (14) der Baugruppen umfassen, wobei die Gehäuse der Baugruppen durch Formkomplementarität zusammenwirken, wobei die Befestigungsmittel eine Gleitverbindung mit einer Gleitschiene (30, 50) zwischen der Heizbaugruppe (10) und der Filterbaugruppe (14) und Mittel (28, 48) zum Festhalten einer der Baugruppen bezüglich der anderen bezüglich einer Translation umfassen.

2. Vorrichtung nach Anspruch 1, **dadurch gekennzeichnet, dass** die Verbindungsmittel eine Hülse (26), die fest mit dem Gehäuse (20) der einen (10) der Heiz- und der Filterbaugruppe verbunden ist, und eine Öffnung (44) zur Aufnahme der Hülse (26), die in der Wand des Gehäuses (40) der anderen (14) der Baugruppen ausgebildet ist, umfassen.

3. Vorrichtung nach Anspruch 2, **dadurch gekennzeichnet, dass** die Hülse (26) und das Gehäuse (20), mit dem sie fest verbunden ist, ein Stück aus einem einzigen Stück bilden.

4. Vorrichtung nach einem der Ansprüche 2 oder 3, **dadurch gekennzeichnet, dass** die Verbindungsmittel (26, 44) mit Dichtungsmitteln (27) versehen sind.

5. Vorrichtung nach einem der Ansprüche 2 bis 4, **dadurch gekennzeichnet, dass** die Bewegung zur Verbindung der Hülse (26) und der Öffnung (44) zur Aufnahme der Hülse durch die Gleitverbindung mit einer Gleitschiene (30, 50) geführt wird.

6. Vorrichtung nach einem der vorangehenden Ansprüche, **dadurch gekennzeichnet, dass** die Verbindung mit der Gleitschiene (30, 50) eine schräge Rampe (30) zum Verschieben einer der Baugruppen (10, 14) an der anderen schafft.

7. Vorrichtung nach einem der vorangehenden Ansprüche, **dadurch gekennzeichnet, dass** die Mittel zum Festhalten bezüglich Translation einen Keil (28), der mit dem Gehäuse (20) von einer der Baugruppen fest verbunden ist, und eine Lasche (48), die mit dem Gehäuse (40) der anderen der Baugruppen fest verbunden ist und quer zur Richtung der Translation angeordnet ist und dazu ausgelegt ist, den Keil (28) bezüglich einer Translation festzuhalten, wenn die Gehäuse (20, 40) der Baugruppen (10, 14) aneinander befestigt sind, umfassen.

8. Vorrichtung nach Anspruch 7, **dadurch gekennzeichnet, dass** auf der Seite (28B) des Keils (28), die an der Lasche (48) anliegt, wenn die Gehäuse (20, 40) der Baugruppen aneinander befestigt sind, mindestens eine Halteeinkerbung ausgebildet ist.

9. Vorrichtung nach den Ansprüchen 7 oder 8, **dadurch gekennzeichnet, dass** der Keil (28) eine geneigte Fläche (28A) zum Lösen der Lasche (48) bei der Bewegung zur Befestigung der Heizbaugruppe (10) an der Filterbaugruppe (14) umfasst.

10. Vorrichtung nach einem der Ansprüche 7 bis 9, **dadurch gekennzeichnet, dass** die Lasche (48) einen teilbaren Teil (48A) umfasst.

11. Vorrichtung nach Anspruch 10, **dadurch gekennzeichnet, dass** die Heizbaugruppe (10) eine längere Lebensdauer hat als jene der Filterbaugruppe (14), wobei ein und dieselbe Heizbaugruppe dazu ausgelegt ist, zeitlich nacheinander mit mehreren Filterbaugruppen verbunden zu werden.

12. Vorrichtung nach einem der vorangehenden Ansprüche, **dadurch gekennzeichnet, dass** die Befestigungsmittel Mittel (28C, 62) zum Halten entlang einer Richtung quer zur Translationsrichtung von einer der Baugruppen (10, 14) bezüglich der anderen umfassen.

13. Vorrichtung nach Anspruch 12, **dadurch gekennzeichnet, dass** die Querhaltemittel zwei Rampen (28C, 62) zur Querverschiebung von einer der Baugruppen (10, 14) bezüglich der anderen umfassen, wobei die jeweiligen Richtungen der Querverschiebung der zwei Rampen entgegengesetzt liegen.

14. Dieselölversorgungsleitung, insbesondere für einen Dieselmotor, vom Niederdrucktyp mit einem Behälter (4), einer Heizbaugruppe (10), einer Filterbaugruppe (14) und einer Dieselölpumpe (8), **dadurch gekennzeichnet, dass** die Heiz- (10) und die Filterbaugruppe (14) eine Filtervorrichtung (6) nach einem der vorangehenden Ansprüche bilden.

## Claims

1. Device for filtering the diesel fuel intended to supply a diesel engine, of the type comprising an electric heating unit (10) which includes a casing (20) internally delimiting a chamber for heating the diesel fuel to be filtered, a filtering unit (14) which includes a casing (40) internally delimiting a chamber for filtering the heated diesel fuel, means for linking the heating and filtering chambers, and means for assembling the casings (20, 40) of the heating (10) and filtering (14) units, **characterized in that** the linking means include means (26, 44) for directly connecting the chambers of the said units in a sealed manner, and **in that** the assembly means include means for removably fastening the casing (20) of one (10) of the heating and filtering units to the casing (40) of the other (14) of the said units, the casings of the said units cooperating through complementarity of shape, which fastening means comprise a slideway-based sliding link (30, 50) between the heating unit (10) and the filtering unit (14), and retaining means (28, 48) preventing translational movement of one of the said units with respect to the other.

2. Device according to Claim 1, **characterized in that** the connecting means include a stub (26) attached to the casing (20) of one (10) of the heating and filtering units, and an orifice (44) for receiving the said stub (26) formed in the wall of the casing (40) of the other (14) of the said units.

3. Device according to Claim 2, **characterized in that** the stub (26) and the casing (20) to which it is attached form a single-piece component.

4. Device according to either of Claims 2 and 3, **characterized in that** the connecting means (26, 44) are provided with sealing means (27).

5. Device according to any one of Claims 2 to 4, **characterized in that** the movement connecting the stub (26) and the orifice (44) for receiving the said stub is guided by the slideway-based sliding link (30, 50).

6. Device according to any one of the preceding claims, **characterized in that** the slideway-based link (30, 50) forms an inclined ramp (30) allowing one of the said units (10, 14) to slide on the other.

7. Device according to any one of the preceding claims, **characterized in that** the retaining means preventing translational movement include a wedge (28) attached to the casing (20) of one of the said units, and a tab (48) attached to the casing (40) of the other of the said units, this tab being arranged transversely to the direction of translation and designed to prevent the wedge (28) from moving translationally when the casings (20, 40) of the said units (10, 14) are fastened to one another.

8. Device according to Claim 7, **characterized in that** at least one retaining notch is formed on the face (28B) of the wedge (28) bearing on the tab (48) when the casings (20, 40) of the said units are fastened to one another.

9. Device according to Claim 7 or 8, **characterized in that** the wedge (28) includes an inclined face (28A) for releasing the tab (48) during the movement of fastening the heating unit (10) to the filtering unit (14).

10. Device according to any one of Claims 7 to 9, **characterized in that** the tab (48) includes a divisible portion (48A).

11. Device according to Claim 10, **characterized in that** the heating unit (10) has a longer service life than the filtering unit (14), a single heating unit being designed to be connected successively over time to a number of filtering units.

12. Device according to any one of the preceding claims, **characterized in that** the fastening means include retaining means (28C, 62) acting in a direction transverse to the direction of translation of one of the said units (10, 14) with respect to the other.

13. Device according to Claim 12, **characterized in that** the transversely acting retaining means include two ramps (28C, 62) for transversely displacing one of the said units (10, 14) with respect to the other, the respective transverse displacement directions of the said two ramps being opposed.

14. Diesel fuel supply line, especially for supplying a diesel engine, of the low-pressure type and including a tank (4), a heating unit (10), a filtering unit (14) and a diesel fuel pump (8), **characterized in that** the heating (10) and filtering (14) units constitute a filtration device (6) according to any one of the preceding claims.
